(19) **Europäisches Patentamt / European Patent Office / Office européen des brevets**

(11) **EP 1 873 457 B1**

(12) **FASCICULE DE BREVET EUROPEEN**

(45) Date de publication et mention
de la délivrance du brevet:
**28.01.2015 Bulletin 2015/05**

(51) Int Cl.:
***F23R 3/14*** (2006.01)

(21) Numéro de dépôt: **07075478.3**

(22) Date de dépôt: **15.06.2007**

(54) **Dispositif d'injection d'un mélange d'air et de carburant, chambre de combustion et turbomachine munies d'un tel dispositif**

Vorrichtung zum Einspritzen einer Mischung aus Luft und Treibstoff, Brennkammer und Strömungsmaschine, die mit einer solchen Vorrichtung ausgestattet ist

Device for injecting a mix of air and fuel, combustion chamber and turbomachine equipped with such a device

(84) Etats contractants désignés:
**DE FR GB IT**

(30) Priorité: **29.06.2006 FR 0605854**

(43) Date de publication de la demande:
**02.01.2008 Bulletin 2008/01**

(73) Titulaire: **SNECMA**
**75015 Paris (FR)**

(72) Inventeurs:
• **Commaret, Patrice André**
**77950 Rubelles (FR)**

• **Sandelis, Denis, Jean Maurice**
**77370 Nangis (FR)**

(74) Mandataire: **Intès, Didier Gérard André et al**
**Cabinet Beau de Loménie**
**158, rue de l'Université**
**75340 Paris Cedex 07 (FR)**

(56) Documents cités:
**EP-A2- 1 278 012     FR-A1- 2 753 779**
**US-A- 3 703 259**

**Description**

L'invention se rapporte au domaine des turbomachines et concerne un dispositif d'injection d'un mélange d'air et de carburant dans une chambre de combustion d'une turbomachine .
Elle concerne plus précisément un dispositif d'injection muni de deux circuits de passage du carburant et se rapporte à un nouveau venturi dont la forme permet d'améliorer la carburation.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection qui permet l'amenée du mélange d'air et de carburant dans la chambre. Chaque dispositif d'injection comprend notamment un injecteur de carburant, des vrilles radiales, un venturi, un bol et un déflecteur, reliés entre eux, le fond de chambre venant se fixer sur le déflecteur.

La chambre de combustion est alimentée par du carburant liquide, mélangé à de l'air issu d'un compresseur. Le carburant liquide est amené jusqu'à la chambre par les injecteurs dans lesquels le carburant est vaporisé en fines gouttelettes. Cette vaporisation est initiée au niveau de l'injecteur grâce à des gicleurs et est poursuivie au niveau du venturi et du bol par l'effet d'air sous pression provenant d'un compresseur. Cet air sous pression traverse, d'une part, les vrilles radiales du dispositif d'injection pour mettre en rotation le carburant pulvérisé par l'injecteur, et, d'autre part, des orifices ménagés dans différentes parties du dispositif d'injection telles que le bol.

Il existe plusieurs types d'injecteurs : les injecteurs traversés par un seul circuit d'alimentation en carburant et ceux traversés par deux circuits d'alimentation en carburant.
Dans le cas d'injecteurs à deux circuits de carburant, un premier circuit, appelé circuit primaire ou circuit ralenti, fonctionne seul entre l'allumage de la turbomachine et un premier régime de rotation de la turbomachine correspondant au ralenti. Un deuxième circuit, appelé circuit secondaire ou circuit plein gaz, fonctionne ensuite en même temps que le circuit primaire entre le régime de rotation correspondant au ralenti et un second régime de rotation correspondant au plein gaz, c'est à dire au régime de rotation le plus élevé de la turbomachine.

L'injection du carburant dans la chambre de combustion peut être directe ou indirecte. Elle est dite directe quand le carburant n'impacte aucune pièce entre sa sortie de l'injecteur et la chambre de combustion. Elle est dite indirecte quand le carburant impacte, après sa sortie de l'injecteur, une pièce avant de parvenir dans la chambre. Généralement la pièce impactée est le venturi du dispositif d'injection.
Comme illustré dans le document FR 2 753 779, l'angle de la nappe de carburant du circuit primaire, qui forme un cône de carburant, est généralement défini de sorte que le carburant n'impacte jamais le venturi et que l'injection du circuit primaire soit donc directe, tandis que l'injection du circuit secondaire est indirecte, le carburant impactant le venturi en sortie d'injecteur. Une telle disposition permet de s'affranchir des effets négatifs constatés dans le cas où la nappe de carburant du circuit primaire impacte aussi le venturi. Ces effets négatifs sont une augmentation rédhibitoire de l'angle de la nappe de carburant en sortie de venturi et une augmentation de la taille des gouttelettes. Ceci provoque la projection de carburant non vaporisé sur les parois de la chambre de combustion, et entraîne la formation de quantités importantes de monoxyde de carbone et d'hydrocarbures imbrûlés. Cependant, le fait que l'injection du circuit primaire soit directe implique que, lorsque seul le circuit primaire fonctionne, le venturi n'est pas impacté par du carburant et n'est donc pas refroidi, tandis que, lorsque les circuits primaire et secondaire fonctionnent, il l'est. Ainsi, le venturi subit des variations de températures importantes, propices à la formation de coke.

L'objectif de l'invention est de limiter les variations de températures subies par le venturi et ainsi de limiter voire supprimer la formation de coke sur cette pièce.

L'invention permet de résoudre ce problème en proposant un dispositif d'injection comportant un venturi dont la géométrie est telle que, associée à un gicleur dont l'angle de pulvérisation est compris dans une certaine plage, la nappe de carburant issue du circuit primaire impacte légèrement, en sortie d'injecteur, le venturi.
Ainsi, il a été constaté, de façon surprenante et allant contre les préjugés décrits notamment dans le document FR 2 753 779, que malgré l'apparition d'effets négatifs lorsque l'impact de la nappe de carburant du circuit primaire sur le venturi est trop important, ces effets disparaissent au profit d'effets bénéfiques, notamment sur la formation de coke, quand l'impact est léger.

Plus particulièrement, l'invention concerne un ensemble d'alimentation en carburant d'une chambre de combustion d'une turbomachine comprenant :

- un injecteur de carburant à double débit destiné à injecter un débit primaire de carburant délivré par un circuit primaire d'alimentation en carburant, et un débit secondaire de carburant délivré par un circuit secondaire d'alimentation en carburant,
- le débit primaire de carburant formant un cône de carburant formé par les débits primaire et secondaire de carburant,
- un dispositif d'injection du carburant issu de l'injecteur,

le dispositif d'injection ayant une symétrie de révolution autour d'un axe et comportant, disposés d'amont en aval dans le sens d'écoulement du débit de carburant, une traversée coulissante au centre de laquelle est positionné l'injecteur, des vrilles radiales reliées par leur extrémité aval à un bol, les vrilles radiales comportant un venturi, muni d'une paroi intérieure ayant un profil évolutif composé d'une partie amont convergente reliée à une partie aval divergente, par une zone de transition, le venturi ayant un diamètre intérieur minimum au niveau de la zone de transition, remarquable en ce que le venturi a une longueur, une forme et une position axiale adaptées pour que le cône de carburant du circuit primaire impacte le venturi, le cône de carburant ayant, en aval du venturi, un demi-angle au sommet $\beta$ compris entre 30 et 40 degrés et comportant une première partie centrale et une seconde partie périphérique, la première partie centrale formant un cône de demi-angle au sommet $\alpha 0$, ce cône étant tangent en un point A0 à la partie aval divergente du venturi, avec $\alpha 0$ inférieur à $\beta$, la seconde partie périphérique formant un cône dont le demi-angle au sommet en sortie d'injecteur est compris entre $\alpha 0$ et $\beta$, et le cône de carburant impactant, en sortie de l'injecteur, la paroi intérieure du venturi sur une surface s'étendant en amont du point de tangence A0 jusqu'à un point A1, ce point A1 étant situé en amont du diamètre intérieur minimum du venturi.

$\alpha 0$ est de préférence compris entre 20 et 30 degrés.

Préférentiellement, le point de tangence A0 entre le cône de la première partie centrale (83a) de la nappe de carburant (83) et la partie aval divergente (51b) du venturi (50) est défini par sa distance L0 par rapport à l'extrémité aval de l'injecteur (80) et par sa distance R0 par rapport à l'axe (Y) du dispositif d'injection, et en ce que L0 et R0 vérifient la relation $1,8\langle\dfrac{L0}{R0}\langle 2,2$.

Avantageusement, le point A1 délimitant en amont la surface d'impact de la nappe (83) sur le venturi (50) est défini par sa distance L1 par rapport à l'extrémité aval de l'injecteur (80) et par sa distance R1 par rapport à l'axe (Y) du dispositif d'injection, en ce que R1 est égal à R0, et en ce que L1 et R1 vérifient les relations R0=R1 et $1,2\langle\dfrac{L1}{R1}\langle 1,5$.

Par ailleurs, l'invention concerne aussi une chambre de combustion comprenant une paroi interne, une paroi externe, un fond de chambre et munie d'au moins un tel ensemble d'alimentation en carburant. L'invention concerne enfin une turbomachine munie d'une telle chambre de combustion.

L'invention sera mieux comprise et d'autres avantages de celle-ci apparaîtront plus clairement à la lumière de la description d'un mode préféré de réalisation, donnée à titre d'exemple non limitatif et faite en référence aux dessins annexés, dans lesquels :

- la figure 1 est une vue schématique en coupe d'une turbomachine et plus précisément d'un turboréacteur d'avion ;
- la figure 2 est une vue schématique en coupe de la partie amont d'une chambre de combustion munie d'un dispositif d'injection selon l'invention ;
- la figure 3 et la figure 4 sont des vues schématiques en coupe d'un dispositif d'injection selon l'invention.

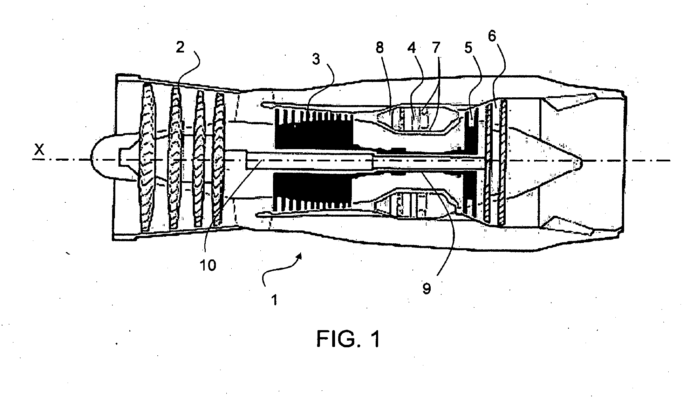

La figure 1 montre en coupe une vue d'ensemble d'une turbomachine 1, par exemple un turboréacteur d'avion, comprenant un compresseur basse pression 2, un compresseur haute pression 3, une chambre de combustion 4, une turbine basse pression 5 et une turbine haute pression 6. La chambre de combustion 4 peut être du type annulaire et est délimitée par deux parois annulaires 7 espacées radialement par rapport à l'axe X de rotation du turboréacteur, et reliées à leur extrémité amont à un fond de chambre annulaire 8. Le fond de chambre 8 comporte une pluralité d'ouvertures (non représentées), régulièrement espacées circonférentiellement. Dans chacune de ces ouvertures est monté un dispositif d'injection. Les gaz de combustion s'écoulent vers l'aval dans la chambre de combustion 4 et alimentent ensuite les turbines 5 et 6 qui entraînent respectivement les compresseurs 2 et 3 disposés en amont du fond de chambre 8, par l'intermédiaire respectivement de deux arbres 9 et 10. Le compresseur haute pression 3 alimente en air les dispositifs d'injection, ainsi que deux espaces annulaires disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 2 participe au refroidissement de ces parois et pénètre dans la chambre par des trous de dilution (non représentés) afin de refroidir les gaz de combustion transmis à la turbine.

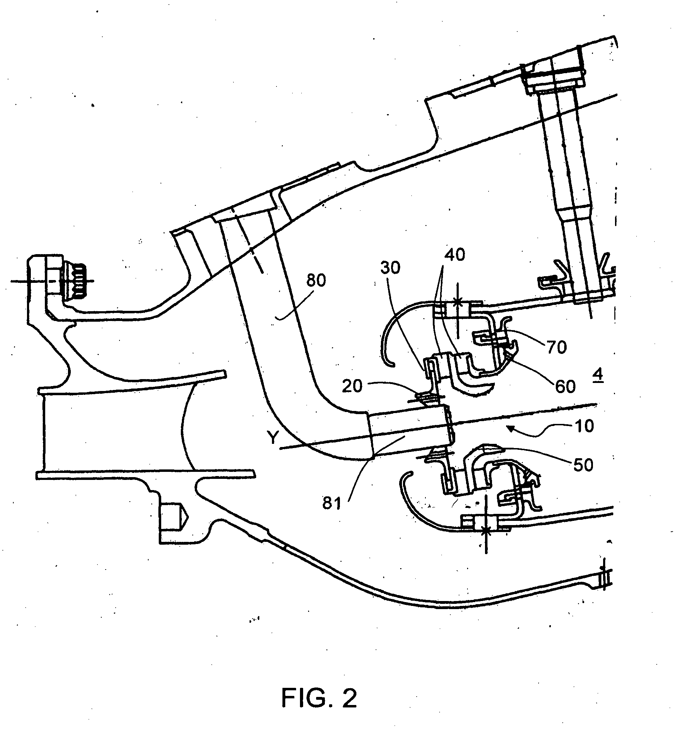

La figure 2 montre en coupe un exemple de réalisation d'un dispositif d'injection 10 selon l'invention. Le dispositif d'injection 10, dont l'axe de symétrie de révolution est repéré Y, comporte, disposés de l'amont vers l'aval, un injecteur 80 disposé au centre d'une traversée coulissante 20, liée par une coupelle annulaire 30 à des vrilles radiales 40. Les vrilles radiales 40 comportent un venturi 50 et sont reliées par leur extrémité aval à un bol 60 à paroi conique divergente. Le bol 60 est lui-même relié au fond de chambre 8 par l'intermédiaire d'un déflecteur 70.

La chambre de combustion 4 est alimentée par du carburant liquide, mélangé à de l'air issu d'un compresseur. Le carburant liquide est amené jusqu'à la chambre par les injecteurs 80. L'extrémité aval 81, encore appelée tête, des injecteurs 80 est positionnée au sein du dispositif d'injection 10, au centre de la traversée coulissante 20, de façon à ce que l'axe de symétrie de la tête 81 des injecteurs corresponde à l'axe de symétrie de la traversée coulissante. Les injecteurs 80 sont munis d'un gicleur 82 disposé à l'intérieur de leur tête 81, au niveau de leur extrémité aval. Le gicleur 82 assure la carburation du mélange air-carburant, ce mélange sortant des injecteurs en une nappe. La nappe de carburant vaporisé forme un cône 83 dont l'angle au sommet diffère selon qu'un seul ou les deux circuits d'alimentation fonctionnent. Ainsi, lorsque seul le circuit primaire fonctionne, la cône 83 a un angle au sommet inférieur à celui obtenu lorsque les circuits primaire et secondaire fonctionnent simultanément. De plus, l'angle du cône 83 de carburant diffère d'un gicleur à un autre et constitue une des caractéristiques à prendre en compte, au moment de la conception, dans le choix d'un gicleur.

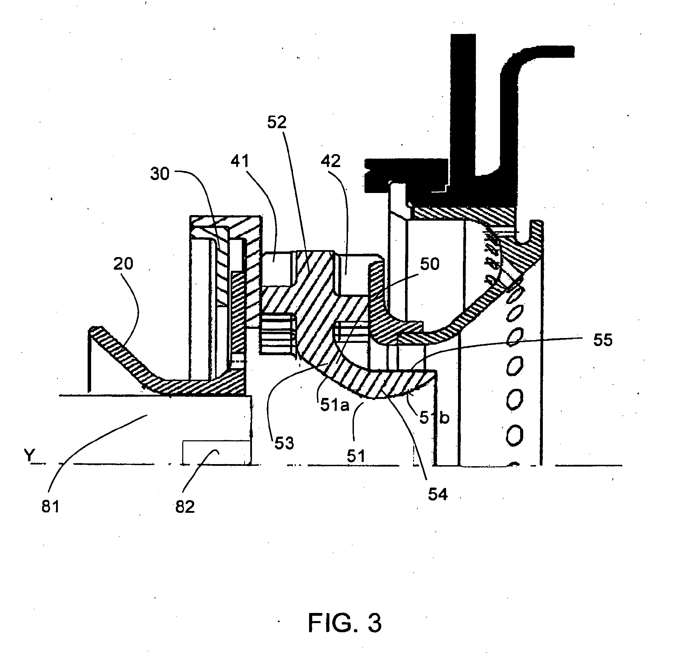

La figure 3 montre une vue schématique en coupe d'un dispositif d'injection selon l'invention.

Le venturi 50, disposé entre deux vrilles radiales 41 et 42, présente une paroi intérieure 51 ayant un profil évolutif composé d'une partie convergente 51a et d'une partie divergente 51 b, reliée entre elles par une zone de transition, le venturi présentant un diamètre minimum au niveau de la zone de transition. Il est composé d'une partie annulaire 52 s'étendant radialement, reliée par sont extrémité radialement interne à une partie conique convergente 53 qui se prolonge en aval en une partie divergente 54. La partie annulaire 52 relie le venturi 50 en amont à la vrille radiale 41 et en aval à la vrille radiale 42. La partie divergente 54 comporte une surface extérieure 55 et une surface intérieure. La surface extérieure 55 est un cylindre d'axe Y, tandis que la surface intérieure s'évase et constitue la partie divergente 51 b de la paroi intérieure 51 du venturi.

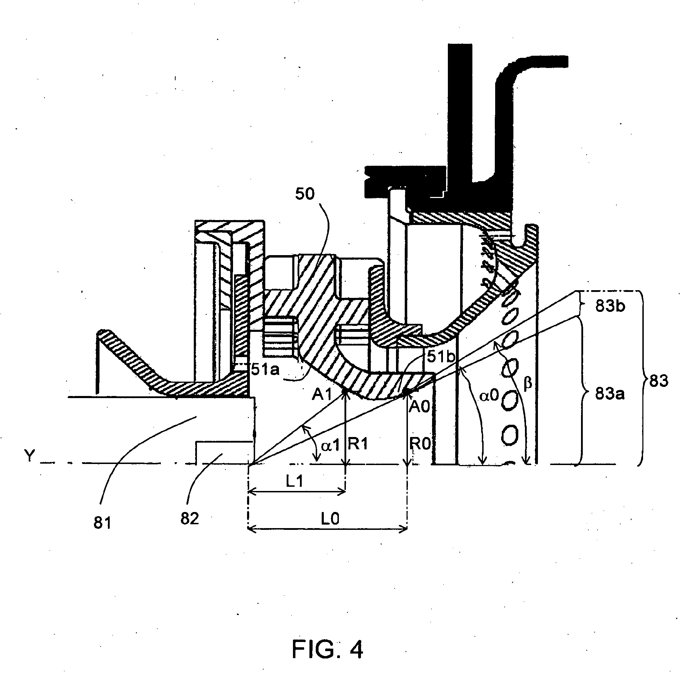

Comme illustré à la figure 4, la forme et les dimensions du venturi 50, ainsi que la position de l'extrémité aval de la tête 81 de l'injecteur 80, sont calculés et le gicleur 82 est choisi et positionné axialement de telle façon que, lorsque le circuit primaire fonctionne seul, le cône 83 de carburant, se décompose en deux parties 83a et 83b correspondant chacune à un type d'injection différent.

La nappe de carburant forme, en sortie d'injecteur, un cône 83 dont le demi-angle au sommet est repéré $\alpha 1$, et en aval du venturi 50, un cône dont le demi-angle au sommet est repéré $\beta$. Préférentiellement, $\beta$ est compris entre 30 et 40 degrés. La première partie 83a, centrale, du cône 83 est un cône central dont le demi-angle au sommet est repéré $\alpha 0$, avec $\alpha 0$ inférieur à $\beta$. Cette première partie.centrale 83a assure une injection directe du mélange air-carburant dans la chambre de combustion. L'angle a0 est tel que le cône central formé par la première partie 83a est tangent au point A0 à la partie divergente 51 b du venturi. Préférentiellement, $\alpha 0$ est compris entre 20 et 30 degrés. La seconde partie 83b, disposée à la périphérie de la première partie 83a, correspond à la partie du cône 83 de carburant dont le demi-angle au sommet en sortie d'injecteur est compris entre $\alpha 0$ et $\beta$ et est obtenue par injection indirecte d'une partie du mélange air-carburant dans la chambre. Cette injection indirecte permet d'obtenir une nouvelle carburation qui est réalisée par une vaporisation secondaire du mélange air-carburant grâce à l'impact de ce mélange sur le venturi. Cet impact a lieu sur toute la surface de la paroi intérieure 51 du venturi 50 située en amont du point de tangence A0 entre la première partie 83a du cône 83 et la partie divergente 51 b du venturi, jusqu'à un point A1. Ce point A1 est situé en amont du diamètre minimum du profil intérieur du venturi 50.

A cet effet, pour un gicleur donné, la forme des parties convergente 51 a et divergente 51 b du venturi est calculée de façon à ce que, d'une part la distance axiale L0 entre l'extrémité aval de la tête 81 de l'injecteur 80 et le point A0, et d'autre part le rayon R0 de la paroi intérieure 51 du venturi au niveau du point A0, vérifient la relation suivante :

$$1{,}8 \langle \frac{L0}{R0} \langle 2{,}2$$

Le point A1 doit quant à lui être situé à une distance par rapport à l'axe Y identique à celle du point A0. Ainsi, le rayon R1 de la paroi interne 51 du venturi au niveau du point A1 doit être égal au rayon R0. De plus, le rayon R1 et la distance axiale L1 entre l'extrémité aval de la tête 81 de l'injecteur 80 et le point A1, doivent vérifier les relations suivantes :

$$R0 = R1 \quad \text{et} \quad 1{,}2 \langle \frac{L1}{R1} \langle 1{,}5$$

Ainsi, lorsque seul le circuit primaire d'alimentation en carburant fonctionne, la majeure partie de l'injection du mélange air-carburant dans la chambre de combustion est directe, tandis qu'une partie moindre est indirecte. En respectant les critères ci-dessus, cette injection indirecte est réalisée dans des proportions telles que les effets négatifs jusqu'alors observés sont notablement réduits, voire disparaissent. Des effets bénéfiques et jusqu'alors non observés apparaissent. Un premier effet bénéfique est qu'une vaporisation secondaire du mélange air-carburant a lieu lorsque celui-ci impacte la partie convergente 51a du venturi 50. Cette vaporisation permet de réduire encore la taille des gouttelettes de carburant ce qui améliore la carburation. Un second effet est lié au fait que quels que soient les circuits d'alimentation en carburant fonctionnant dans l'injecteur, le venturi est mouillé par du carburant. Il est ainsi refroidi continuellement pendant le fonctionnement de la turbomachine et les écarts de températures qu'il subit sont beaucoup plus faibles, ce qui permet de lutter contre la formation et le dépôt de coke. De plus, l'angle au sommet du cône 83 de mélange air-carburant en aval du venturi est plus grand que lorsque l'injection, quand seul le circuit primaire fonctionne, est uniquement directe, sans interférer de façon néfaste avec les parois de la chambre de combustion. Ceci permet d'améliorer la propagation de la flamme et par conséquent la capacité de rallumage de la chambre en vol à faible nombre de mach, c'est à dire à faible vitesse de rotation de la turbomachine. Ainsi, l'enroulement du moteur, c'est à dire son accélération, est lui aussi amélioré puisque l'énergie disponible pour accélérer est plus importante pour vaincre le même couple résistant.

**Revendications**

1. Ensemble d'alimentation en carburant d'une chambre de combustion d'une turbomachine comprenant :

    - un injecteur de carburant (80) à double débit destiné à injecter un débit primaire de carburant délivré par un circuit primaire d'alimentation en carburant, et un débit secondaire de carburant délivré par un circuit secondaire d'alimentation en carburant,
    - le débit primaire de carburant formant un cône (83) de carburant formé par les débits primaire et secondaire de carburant,
    - un dispositif d'injection du carburant issu de l'injecteur (80),
    le dispositif d'injection ayant une symétrie de révolution autour d'un axe (Y) et comportant, disposés d'amont en aval dans le sens d'écoulement du débit de carburant, une traversée coulissante (20) au centre de laquelle est positionné l'injecteur (80), des vrilles radiales (40, 41, 42) reliées par leur extrémité aval à un bol (60), les vrilles radiales (40, 41, 42) comportant un venturi (50), muni d'une paroi intérieure (51) ayant un profil évolutif composé d'une partie amont convergente (51 a) reliée à une partie aval divergente (51 b), par une zone de transition, le venturi (50) ayant un diamètre intérieur minimum au niveau de la zone de transition, **caractérisé en ce que** le venturi a une longueur, une forme et une position axiale adaptées pour que le cône (83) de carburant du circuit primaire impacte le venturi (50),
le cône de carburant (83) ayant, en aval du venturi (50), un demi-angle au sommet β compris entre 30 et 40 degrés,
le cône de carburant (83) comportant une première partie centrale (83a) et une seconde partie périphérique (83b), la première partie centrale (83a) formant un cône de demi-angle au sommet α0, ce cône étant tangent en un point A0 à la partie aval divergente (51b) du venturi (50), avec α0 inférieur à β,
la seconde partie périphérique (83b) formant un cône dont le demi-angle au sommet en sortie d'injecteur est compris entre α0 et β,
et le cône de carburant (83) impactant, en sortie de l'injecteur (80), la paroi intérieure (51) du venturi (50) sur une surface s'étendant en amont du point de tangence A0 jusqu'à un point A1, ce point A1 étant situé en amont du diamètre intérieur minimum du venturi (50).

2. Ensemble d'alimentation en carburant selon la revendication 1 **caractérisé en ce que** α0 est compris entre 20 et 30 degrés.

3. Ensemble d'alimentation en carburant selon l'une quelconque des revendications 1 ou 2, **caractérisé en ce que** le point de tangence A0, entre le cône de la première partie centrale (83a) du cône de carburant (83) et la partie aval divergente (51 b) du venturi (50), est défini par sa distance L0 par rapport à l'extrémité aval de l'injecteur (80) et par sa distance R0 par rapport à l'axe (Y) du dispositif d'injection, et **en ce que** L0 et R0 vérifient la relation $1{,}8\langle\dfrac{L0}{R0}\langle 2{,}2$ .

4. Ensemble d'alimentation en carburant selon l'une quelconque des revendications 1 à 3, **caractérisé en ce que** le point A1, délimitant en amont la surface d'impact du cône de carburant (83) sur le venturi (50), est défini par sa distance L1 par rapport à l'extrémité aval de l'injecteur (80) et par sa distance R1 par rapport à l'axe (Y) du dispositif d'injection, **en ce que** R1 est égal à R0, et **en ce que** L1 et R1 vérifient les relations $R0 = R1$ et $1{,}2\langle\dfrac{L1}{R1}\langle 1{,}5$ .

5. Chambre de combustion comprenant une paroi interne, une paroi externe (7), un fond de chambre (8) **caractérisée en ce qu'**elle est munie d'au moins un ensemble d'alimentation en carburant selon l'une quelconque des revendications précédentes.

6. Turbomachine munie d'une chambre de combustion selon la revendication 5.

**Patentansprüche**

1. Anordnung zur Treibstoffversorgung einer Brennkammer einer Turbomaschine, umfassend:

- eine Zweistrom-Treibstoffeinspritzdüse (80), die dazu bestimmt ist, einen primären Treibstoffstrom, welcher durch einen primären Treibstoffversorgungskreis geliefert wird, und einen sekundären Treibstoffstrom, der durch einen sekundären Treibstoffversorgungskreis geliefert wird, einzuspritzen,
- wobei der primäre Treibstoffstrom einen durch den primären und den sekundären Treibstoffstrom gebildeten Treibstoffkegel (83) bildet,
- eine Vorrichtung zum Einspritzen des aus der Einspritzdüse (80) kommenden Treibstoffs, wobei die Einspritzvorrichtung eine Rotationssymmetrie um eine Achse (Y) aufweist und, von stromaufwärts nach stromabwärts in der Strömungsrichtung des Treibstoffstroms angeordnet, eine Schiebedurchführung (20), in deren Mitte die Einspritzdüse (80) angeordnet ist, radiale Verwirbler (40, 41, 42), die über ihr stromabwärtiges Ende mit einer Schale (60) verbunden sind, umfasst, wobei die radialen Verwirbler (40, 41, 42) ein Venturi-Rohr (50) umfassen, das mit einer Innenwand (51) mit einem veränderlichem Profil, bestehend aus einem stromaufwärtigen konvergenten Teil (51 a), der durch einen Übergangsbereich mit einem stromabwärtigen divergenten Teil (51 b) verbunden ist, versehen ist, wobei das Venturi-Rohr (50) in Höhe des Übergangsbereichs einen minimalen Innendurchmesser aufweist, **dadurch gekennzeichnet, dass** das Venturi-Rohr eine Länge, eine Form und eine axiale Position aufweist, die dazu ausgelegt sind, dass der Treibstoffkegel (83) des primären Kreises auf das Venturi-Rohr (50) trifft, wobei der Treibstoffkegel (83) stromabwärts des Venturi-Rohrs (50) einen halben Öffnungswinkel β zwischen 30 und 40 Grad aufweist, wobei der Treibstoffkegel (83) einen ersten mittleren Teil (83a) und einen zweiten Umfangsteil (83b) umfasst, wobei der erste mittlere Teil (83a) einen Kegel mit halbem Öffnungswinkel α0 bildet, wobei dieser Kegel den stromabwärtigen divergenten Teil (51 b) des Venturi-Rohrs (50) in einem Punkt A0 berührt, wobei α0 kleiner β, wobei der zweite Umfangsteil (83b) einen Kegel bildet, dessen halber Öffnungswinkel am Ausgang der Einspritzdüse zwischen α0 und β beträgt, und wobei der Treibstoffkegel (83) am Ausgang der Einspritzdüse (80) auf die Innenwand (51) des Venturi-Rohrs (50) über eine Fläche trifft, die sich stromaufwärts des Berührungspunktes A0 bis zu einem Punkt A1 erstreckt, wobei dieser Punkt A1 stromaufwärts des minimalen Innendurchmessers des Venturi-Rohrs (50) gelegen ist.

2. Treibstoffversorgungsanordnung nach Anspruch 1, **dadurch gekennzeichnet, dass** α0 zwischen 20 und 30 Grad beträgt.

3. Treibstoffversorgungsanordnung nach einem der Ansprüche 1 oder 2, **dadurch gekennzeichnet, dass** der Berührungspunkt A0 zwischen dem Kegel des ersten mittleren Teils (83a) des Treibstoffkegels (83) und dem stromabwärtigen divergenten Teil (51 b) des Venturi-Rohrs (50) durch seinen Abstand L0 von dem stromabwärtigen Ende der Einspritzdüse (80) sowie durch seinen Abstand R0 von der Achse (Y) der Einspritzvorrichtung definiert ist und dass L0 und R0 die Beziehung $1{,}8 < \dfrac{L0}{R0} < 2{,}2$ erfüllen.

4. Treibstoffversorgungsanordnung nach einem der Ansprüche 1 bis 3, **dadurch gekennzeichnet, dass** der Punkt A1, der stromaufwärts die Fläche des Auftreffens des Treibstoffkegels (83) auf das Venturi-Rohr (50) begrenzt, durch seinen Abstand L1 von dem stromabwärtigen Ende der Einspritzdüse (80) und durch seinen Abstand R1 von der Achse (Y) der Einspritzvorrichtung definiert ist, dass R1 gleich R0 ist und dass L1 und R1 die Beziehungen R0 = R1 und $1{,}2 < \dfrac{L1}{R1} < 1{,}5$ erfüllen.

5. Brennkammer, umfassend eine Innenwand, eine Außenwand (7), einen Kammerboden (8), **dadurch gekennzeichnet, dass** sie mit wenigstens einer Treibstoffversorgungsanordnung nach einem der vorhergehenden Ansprüche ausgestattet ist.

6. Turbomaschine, die mit einer Brennkammer nach Anspruch 5 ausgestattet ist.

**Claims**

1. A turbomachine combustion chamber fuel supply assembly comprising:

- a dual-flow fuel injector (80) intended to inject a primary flow of fuel delivered by a primary fuel supply circuit and a secondary flow of fuel delivered by a secondary fuel supply circuit,

- the primary flow of fuel forming a cone (83) of fuel formed by the primary and secondary flows of fuel,
- an injection device for injecting the fuel from the injector (80),

the injection device having symmetry of revolution about an axis (Y) and comprising, positioned from the upstream to the downstream in the direction in which the flow of fuel flows, a sliding bushing (20) at the center of which the injector (80) is positioned, radial swirl vanes (40, 41, 42) connected by their downstream end to a bowl (60), the radial swirl vanes (40, 41, 42) comprising a Venturi (50) equipped with an interior wall (51) that has an evolving profile made up of a convergent upstream part (51a) connected to a divergent downstream part (51b) by a transition region, the Venturi (50) having a minimum inside diameter at the transition region, **characterized in that** the Venturi has a length, a shape and an axial position which are all designed such that the cone (83) of fuel from the primary circuit strikes the Venturi (50), the cone of fuel (83) having, downstream of the Venturi (50), a vertex half-angle $\beta$ ranging between 30 and 40 degrees, the cone of fuel (83) comprising a central first part (83a) and a peripheral second part (83b), the central first part (83a) forming a cone with a vertex half-angle $\alpha 0$, this cone being tangential at a point A0 to the downstream divergent part (51b) of the Venturi (50), where $\alpha 0$ is less than $\beta$, the peripheral second part (83b) forming a cone with a vertex half-angle at the injector outlet ranges between $\alpha 0$ and $\beta$, and the cone of fuel (83), as it leaves the injector (80), striking the interior wall (51) of the Venturi (50) over a surface extending upstream of the point of tangency A0 as far as a point A1, this point A1 lying upstream of the minimum inside diameter of the Venturi (50).

2. The fuel supply assembly according to claim 1, **characterized in that** $\alpha 0$ ranges between 20 and 30 degrees.

3. The fuel supply assembly according to any one of claims 1 or 2, **characterized in that** the point of tangency A0 between the cone of the central first part (83a) of the cone of fuel (83) and the divergent downstream part (51b) of the Venturi (50) is defined by its distance L0 with respect to the downstream end of the injector (80) and by its distance R0 with respect to the axis (Y) of the injection device, and **in that** L0 and R0 satisfy the relationship

$$1.8 < \frac{L0}{R0} < 2.2.$$

4. The fuel supply assembly according to any one of claims 1 to 3, **characterized in that** the point A1 which delimits the upstream boundary of the surface of the Venturi (50) struck by the cone of fuel (83) is defined by its distance L1 with respect to the downstream end of the injector (80) and by its distance R1 with respect to the axis (Y) of the injection device; **in that** R1 is equal to R0; and L1 and R1 satisfy the relationships R0 = R1 and

$$1.2 < \frac{L1}{R1} < 1.5.$$

5. A combustion chamber comprising an internal wall, an external wall (7), a chamber end wall (8), **characterized in that** it is equipped with at least one fuel supply assembly according to any one of the preceding claims.

6. A turbomachine equipped with a combustion chamber according to claim 5.

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2753779